# EUROPÄISCHE PATENTANMELDUNG

(11) **EP 2 433 825 A1**
(43) Veröffentlichungstag der Anmeldung: **28.03.2012**
(21) Anmeldenummer: 11180325.0
(22) Anmeldetag: 07.09.2011
(51) Int. Cl.: B60H 1/00

(54) **Kraftfahrzeugklimaanlage**

(30) Priorität: 28.09.2010 DE 202010013671 U
(71) Anmelder: Behr GmbH & Co. KG, 70469 Stuttgart (DE)
(72) Erfinder: Zerelles, Paul, 70197 Stuttgart (DE); Berger, Michael, 71562 Ludwigsburg (DE)
(74) Vertreter: Grauel, Andreas

(57) **Zusammenfassung**

Die Erfindung betrifft eine Kraftfahrzeugklimaanlage (1), umfassend ein Gehäuse (13), einen Frischluftkanal (4) zum Durchleiten von Frischluft aus einer Umgebung eines Kraftfahrzeuges, einen Umluftkanal (5) zum Durchleiten von Umluft aus einem lnnenraum des Kraftfahrzeuges, einen Zuführungsluftkanal (6) zum Durchleiten von Frischluft und/oder von Umluft, eine bewegbare, insbesondere verschwenkbare, Umluftklappe (9), welche in einer Frischluftstellung den Umluftkanal (5) verschließt und der Frischluftkanal (4) geöffnet ist und in einer Umluftstellung den Frischluftkanal (4) verschließt und der Umluftkanal (5) geöffnet ist, wobei die Umluftklappe (9) mit einer strukturierten Oberfläche (10) zur Reduzierung von Luftgeräuschen ausgebildet ist.

## Beschreibung

Die Erfindung betrifft eine Kraftfahrzeugklimaanlage gemäß dem Oberbegriff des Anspruches 1.

Kraftfahrzeugklimaanlagen dienen dazu, die dem Innenraum eines Kraftfahrzeuges zuzuführende Luft zu erwärmen und/oder zu kühlen. Die Kraftfahrzeugklimaanlagen sind mit verschiedenen als Luftklappen ausgebildeten Luftleiteinrichtungen versehen. Die Luftklappen dienen dabei z. B. zu steuern, ob dem Fahrzeuginnenraum Luft aus der Umgebung oder aus dem Fahrzeuginnenraum zugeführt wird. Diese Luftklappen werden als Umluflklappen bezeichnet. Ferner weist die Kraftfahrzeugklimaanlage au-βerdem zusätzliche Luftklappen auf welche dazu dienen, die in den Fahrzeuginnenraum leitbare Menge an Luft zu steuern. Zum Bewegen der Luftklappen werden als Aktuatoren beispielweise Stellantriebe mit einem Getriebe und einem Elektromotor verwendet.

Die Umluftklappe kann dabei zwischen einer Frischiuftstellung und einer Umluftstellung verschwenkt werden. In der Frischluftstellung ist der Umluftkanal verschlossen und in die Kraftfahrzeugklimaanlage gelangt ausschließlich Frischluft aus der Umgebung des Kraftfahrzeuges durch den Frischluftkanal und in der Umluftstellung ist der Frischluftkanal verschlossen und es gelangt ausschließlich Luft durch den Umluftkanal aus einem Innenraum desKraftfahrzeuges wiederum in den Innenraum des Kraftfahrzeuges durch die Kraftfahrzeugklimaanlage. Beim Bewegen der Umluftklappe von der Frischlufistellung in die Umluftstellung treten Zwischenstellungen auf, bei denen der Frischluftkanal nur teilweise, beispielsweise ungefähr zu einem Viertel, von der Umluftklappe verschlossen ist. Bei einem an dem Frischluftkanal anliegendem Staudruck aufgrund einer Fahrt des Kraftfahrzeuges treten an der Umluftklappe Pfeifgeräusche auf. Derartige Pfeifgeräusche sind im Innenraum des Kraftfahrzeuges wahrnehmbar und aufgrund der Geräuschstärke störend.

Die DE 698 05 216 T2 zeigt eine Mehrfachklappenanordnung für eine Kraftfahrzeugklimaanlage. Die Anordnung umfasst einen Rahmen, der eine Vielzahl von schwenkbaren Klappen stützt, die drehbar um zueinander parallele Achse montiert sind. Die Rotation der Klappen wird über einen gemeinsamen Antriebsmechanismus gesteuert. Dabei ist ein freier Rand der Klappen in einem Berührungsbereich mit der benachbarten Klappe mit einem verformbaren Dicht- und Anlageteil versehen.

Die Aufgabe der vorliegenden Erfindung besteht deshalb darin, eine Kraftfahrzeugklimaanlage mit einer Umluftklappe zur Verfügung zu stellen, bei an der Umluftklappe in einer Zwischenstellung auch bei Staudruck im Frischluftkanal keine oder sehr geringe Luftgeräusche, z. B. Pfeifgeräusche, auftreten.

Diese Aufgabe wird gelöst mit einer Kraftfahrzeugklimaanlage, umfassend ein Gehäuse, einen Frischluftkanal zum Durchleiten von Frischluft aus einer Umgebung eines Kraftfahrzeuges, einen Umluftkanal zum Durchleiten von Umluft aus einem Innenraum des Kraftfahrzeuges, einen Zuführungsluftkanal im Strömungsrichtung der Luft nach einer Umluftklappe zum Durchleiten von Frischluft und/oder von Umluft, eine bewegbare, insbesondere verschwenkbare, Umluftklappe, welche in einer Frischluhstellung den Umluftkanal verschließt und der Frischluftkanal geöffnet ist und in einer Umluftstellung den Frischluftkanal verschließt und der Umluftkanal geöffnet ist, wobei die Umluftklappe mit einer strukturierten Oberfläche zur Reduzierung von Luftgeräuschen ausgebildet ist.

Aufgrund der strukturierten Oberfläche an der Umluftklappe können Luftgeräusche, insbesondere Pfeifgeräusche, reduziert oder ausgeschlossen werden oder auf ein Maß reduziert werden, so dass sie im Innenraum des Kraftfahrzeuges nicht mehr als störend wahrgenommen werden. Aufgrund der strukturierten Oberfläche kann die Strömung in Zwischenstellungen der Umluftklappe verändert werden, so dass störende Luftgeräusche an der Kraftfahrzeugklimaanlage nicht mehr auftreten.

In einer zusätzlichen Ausgestaltung ist eine Zwischenstellung der Umluftklappe eine Stellung der Umluftklappe, in welcher der Frischluftkanal, insbesondere eine Strömungsquerschnittsfläche des Frischluftkanales, von der Umluftklappe zwischen 51% und 1%, insbesondere zwischen 30% und 1%oder zwischen 20 % und 1%, von der Umluftklappe teilweise verschlossen ist.

Insgesamt dient die strukturierte Oberfläche im Wesentlichen ausschließlich zur Reduzierung von Luftgeräuschen, weil vorzugsweise aufgrund der Geometrie und/oder der Höhe der strukturierten Oberfläche diese im Wesentlichen keinen Beitrag zur Versteifung der Umluftklappe leisten kann.

In einer weiteren Ausgestaltung ist die strukturierte Oberfläche als Rippen und/oder Dome und/oder Waben ausgebildet.

In einer ergänzenden Ausführungsform ist die Umluftklappe um eine Schwenkachse verschwenkbar gelagert und in einem Schnitt senkrecht zu der Schwenkachse als ein Kreissegment ausgebildet. Aufgrund der Ausbildung der Umluftklappe im dem Schnitt senkrecht zu der Schwenkachse als Kreissegment bildet somit die Umluftklappe teilweise einen Teilzylinderabschnitt bzw. ein Zylindersegment.

Vorzugsweise ist die strukturierte Oberfläche der Umluftklappe an einer in Richtung der Frischluft in dem Frischluftkanal und an einer in Richtung der Umluft in dem Umluftkanal zugewandten Luvseite an der Umluftklappe ausgebildet. Die Luvseite der Umluftklappe ist die entscheidende Seite, weil auf der Luvseite die Frischluft an der Oberfläche der Umluftklappe auftrifft und hier die störenden Luftgeräusche, insbesondere Pfeifgeräusche, entstehen. Deshalb ist die Ausbildung der strukturierten Oberfläche der Umluftklappe an der Luvseite für die Reduzierung der Luftgeräusche entscheidend.

In einer Variante ist die strukturierte Oberfläche an einer bezüglich der Schwenkachse abgewandten Seite an der Umluftklappe ausgebildet.

Zweckmäßig ist die strukturierte Oberfläche in Richtung der Schwenkachse nur an einem Teilabschnitt, insbesondere mittlerem Teilabschnitt, an einer Seite ausgebildet. An dem Frischluftkanal treten im Bereich des Zentrums des Frischlufikanals die maximalen Strömungsgeschwindigkeiten der Frischluft auf. Bei einer Anordnung der strukturierten Oberfläche in einein mittleren Teilabschnitt an der Oberfläche der Umluftklappe in Richtung der Schwenkachse ist in einer Zwischenstellung der Umluftklappe die strukturierte Oberfläche im Bereich dieser maximalen Strömungsgeschwindigkeiten der Frischluft angeordnet, so dass dadurch eine besonders effektive Reduzierung der Luftgeräusche mit Hilfe der strukturierten Oberfläche erreicht werden kann. In einer weiteren Ausführungsform ist die strukturierte Oberfläche in tangentialer Richtung bezüglich der Schwenkachse nur teilweise an einer Seite ausgebildet, insbesondere nur an einem tangentialen Teilabschnitt, welcher dem Frischluftkanal zugewandt ist. Bei einer Anordnung der strukturierten Oberfläche an einem tangentialen Teilabschnitt, welcher dem Frischluftkanal zugewandt ist, ist die strukturierte Oberfläche in einer Zwischenstellung der Umluftklappe im Bereich der maximalen Strömungsgeschwindigkeiten der Frischluft in dem Frischluftkanal angeordnet, so dass dadurch eine besonders effektive Reduzierung der Luftgeräusche mit Hilfe der strukturierten Oberfläche an der Umluftklappe möglich ist.

Insbesondere liegt die Höhe der strukturierten Oberfläche zwischen 2,5 und 5 mm, insbesondere zwischen 3,0 und 3,7 mm, und/oder die Höhe der strukturierten Oberfläche liegt zwischen dem 1,5- und 3-Fachen, insbesondere zwischen dem 1,7 und 2,2-Fachen, der Dicke, der Umluftklappe, insbesondere einem Teilzylinderabschnitt der Umnluftklappe, außerhalb der strukturierten Oberfläche. Die Höhe der strukturierten Oberfläche ist beispielsweise die radiale Ausdehnung der strukturierten Oberfläche bezüglich der Schwenkachse oder der Abstand eines äußeren Endes der strukturierten Oberfläche zu der übrigen Umluftklappe außerhalb der strukturierten Oberfläche oder die Ausdehnung der strukturierten Oberfläche in Richtung einer Achse der strukturierten Oberfläche. Die Höhe der strukturierten Oberfläche ist somit vorzugsweise größer als die Höhe einer Versteifungsstruktur zur Erhöhung der Steifigkeit der Umluftklappe. Die Höhe einer Versteifungsstruktur, welche aus dem Stand der Technik bereits bekannt ist, ist nicht ausreichend, um eine ausreichende Reduzierung der Luftgeräusche, beispielsweise durch Bildung von Mikrowirbeln im Bereich der Oberfläche der strukturierten Oberfläche an der Umluftklappe, zu erreichen.

In einer weiteren Ausgestaltung ist die Umloftklappe mit einer Versteifugsstruktur, insbesondere Rippen- oder Wabenstruktur, außenseitig versehen und/oder die Umluftklappe weist einen Dichtrand, z. B. einen Rand aus einem elastischen Material oder eine Schaumdichtung, auf und/oder die Umluftklappe ist mittels einer Gleitlagerung mit dem Gehäuse verbunden und/oder die Kraftfahrzeugklimaanlage umfasst einen Aktuator, z.B. einen Elektromotor, und einen Mechanismus und der Aktuator ist mit der Umluftklappe mechanischen verbunden, so dass die wenigstens eine Umluftklappe mittels des Mechanismus von dem Aktuator bewegbar ist und/oder die Kraftfahrzeugklimaanlage umfasst ein Gebläseund/oder einen Kältemittelverdampfer und/oder eine Heizeinrichtung,

In einer ergänzenden Ausgestaltung ist die Umluftklappe einteilig, vorzugsweiseaus thermoplastischem Kunststoff, hergestellt, mit der strukturierten Oberfläche und vorzugsweise auch der Versteifungsstruktur.

In einer ergänzenden Ausführungsform weist die Kraftfahrzeugklimaanlage nur eine Umluftklappe auf.

In einer weiteren Ausführungsform weist der Kunststoff des Dichtrandes größere elastische Eigenschaften auf als der Kunststoff der wenigstens einen Luftklappe außerhalb des Dichtrandes, beispielsweise besteht der Dichtrand aus einem weichen Kunststoff oder Gummi und die übrige Luftklappe aus einem harten Kunststoff.

In einer ergänzenden Ausgestaltung ist das Gehäuse und/oder die wenigstenseine Luftklappe aus thermoplastischen und/oder duroplastischen und/oder elastomeren Kunststoff hergestellt oder wird aus diesem hergestellt.

Zweckmäßig ist das Gehäuse der Kraftfahfzeugklimaanlage ein- oder mehrteilig.

In einer weiteren Ausgestaltung weist die Kraftfahrzeugklimaanlage wenigstens eine Luftleiteinrichtung, z.B. eine Luftklappe oder ein Rollo, auf, um die Menge der durch einen Luftkanal leitbaren Menge an Luft zu steuern.

In einer weiteren Ausgestaltung ist der Aktuator ein Elektromotor oder ein Piezoeiement.

Vorzugsweise weist die Kraftfahrzeugklimaanlage wenigstens einen Luftkanal zum Durchieiten von Luft auf.

Zweckmäßig sind der Frischluftkanal und/oder der Umluftkanal und/oder der Zuführungskanal von einer Wandung des Gehäuses begrenzt.

In einer weiteren Ausgestaltung weist der Aktualor eine Positionsermittlungseinrichtung zur Erfassung der Lage des Mechanismus, z. B. einer Welle, auf.

Insbesondere ist die Positionsermittlungseinheit mit einer Steuerungseinheit für die Kraftfahrzeugklimasnlage verbunden und mittels der von der Positionsermittlungseinheit erfassten Daten der Aktuator steuerbar zur Erzielung einer bestimmten Lage des Mechanismus bzw. der Umluftklappe.

Im Nachfolgenden wird ein Ausführungsbeispiel der Erfindung unter Bezugnahme auf die beigefügten Zeichnungen näher beschrieben. Es zeigt:
- Fig. 1: einen Teilschnitt ohne Umluftklappe einer Kraftfahrzeugklimaanlage,
- Fig. 2: eine Ansicht einer Luvseite einer Umluftklappe und
- Fig. 3: einen Teilschnitt mit Umluftklappe der Kraftfahrzeugklimaanlage.

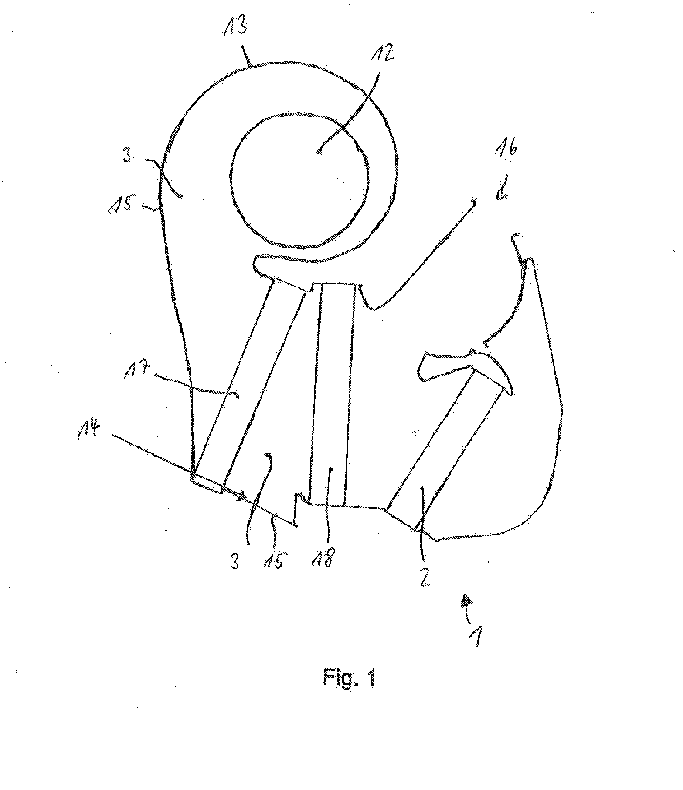

Fig. 1 zeigt eine Kraftfahrzeugklimaantage 1. In einem ein- oder mehrteiligen Gehäuse 13 mit einer Bodenwandung 14 und einem Austrittsabschnitt 16 ist ein Gebläse 12, ein Filter 17, ein Kältemitteliverdampfer 18 und ein Wärmeübertrager als eine Heizeimichtung 2 angeordnet. Das Gehäuse 13 bildet somit einen Luftkanal 3 zum Durchleiten der Luft. Gehäusewandungen 15 des Gehäuses 13 begrenzen den Luftkanal 3. Die Luft für den Innenraum eines Kraftfahrzeuges wird mittels des Gebläses 12 durch den Filter 17, den Kältemittelverdamfer 18 sowie den Wärmeübertrager als, vorzugsweise elektrische oder von Kühlmittel eines nicht dargestellten Verbrennungsmotors durchströmte, Heizeinrichtung 2 geleitet. Der Kältemittelverdampfer 18 dient zum Kühlen der durch die Kraftfahrzeugklimaanlage 1 geleiteten Luft.

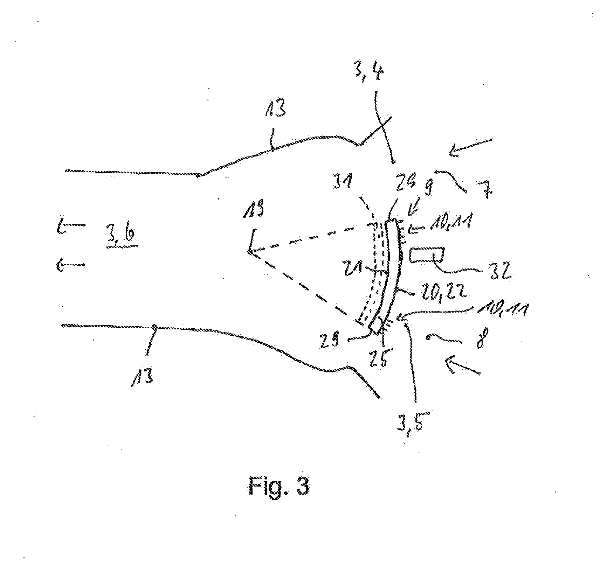

Die von dem Gebläse 12 angesaugte Luft wird durch einen Zuführungskanal 6 (Fig. 3) dem Gebläse 12 und damit der übrigen Kraftfahrzeugklimaanlage 1 zugeführt. In Fig. 1 ist dieser Zuführungskanal 6 nicht dargestellt. Durch den Zuführungskanal 6 kann entweder Frischluft aus der Umgebung des Kraftfahrzeuges und/oder Umluft aus dem Innenraum des Kraftfahrzeuges von der Kraftfahrzeugklimaanlage 1 mit Hilfe des Gebläses 12 angesaugt werden. Die Kraftfahrzeugklimaanlage 1 ist hierzu mit einer Umluftklappe 9 versehen, welche um eine Schwenkachse 19 verschwenkbar gelagert ist.

Das Gehäuse 13 der Kraftfahrzeugklimaanlage bildet einen Frischluftkanal 4 der mit einer Frischluftöffnung 7 endet und einen Umluftkanal 5, der mit einer Umluftöffnung 8 endet (Fig. 3). Durch den Frischluftkanal 4 kann Frischluft aus der Umgebung des Kraftfahrzeuges und durch den Umluftkanal 5 kann Luft aus dem Innenraum des Kraftfahrzeuges angesaugt werden können. Mittels der verschwenkbaren Umluftklappe 9 kann in einer Frischluftstellung der Umluftkanal 5 verschlossen und der Frischluftkanal 4 geöffnet werden und in einer Umluftstellung der Umluftklappe 9 ist der Frischluftkanal 4 verschlossen und der Umluftkanal 5 geöffnet, so dass in der Umluftstellung ausschließlich Luft aus dem Innenraum des Kraftfahrzeuges durch den Zuführungskanal 6 von dem Gebläse 12 angesaugt werden kann. In Fig. 3 ist eine Zwischenstellung der Umluftklappe 9 dargestellt, in welcher sich die Umluftklappe 9 von der Frischluftstellung in die Umluftstellung bewegt oder auch umgekehrt oder sich dauerhaft in einer Zwischenstellung befindet.

Die Umluftklappe 9 ist in einem Schnitt senkrecht zu der Schwenkachse 19, welche der Darstellung in Fig. 3 entspricht, weil in Fig. 3 die Zeichenebene senkrecht zu der Schwenkachse 19 ausgerichtet ist, als ein Kreissegment ausgebildet, so dass in einem Teilabschnitt der Umluftklappe 9 diese einen Teilzylinderabschnitt 25 bildet. Die Umluftklappe 9 weist bezüglich der Strömungsrichtung der Frischluft in dem Frischluftkanal 4 und der Umluft in dem Umluftkanal 5 eine Luvseite 20, welche eine abgewandte Seite 22 bezüglich der Schwenkachse 19 ist und weist eine Leeseite 21 auf. Eine Trennwandung 32 des Gehäuses trennt dabei den Frischluftkanal 4 von dem Umluftkanal 5 ab.

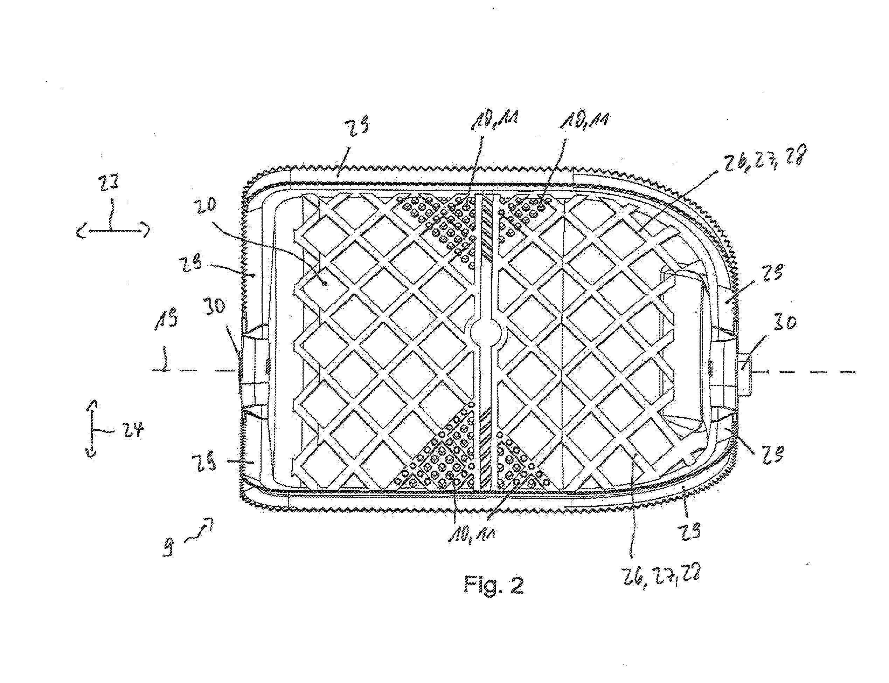

In Fig. 2 ist eine perspektivische Ansicht nur der Umluftklappe 9 in Richtung auf die Luvseite 20 dargestellt. An der Luvseite 20 ist die Umluftklappe 9 mit einer strukturierten Oberfläche 10 als eine Vielzahl von Dome 11 ausgebildet. Die Dome 11 sind dabei in einer Richtung 23 der Schwenkachse 19 nur an einem mittleren Teilabschnitt an der Luvseite 20 ausgebildet und in analoger Weise auch in tangentialer Richtung 24 bezüglich der Schwenkachse 19 nur in einem Teilabschnitt an der Luvseite 20 vorhanden. Dabei ist die strukturierte Oberfläche 10 bezüglich der tangentialen Richtung 24 nur an einem Teilabschnitt ausgebildet, welcher dem Frischluftkanal 4 zugewandt ist. In der Darstellung in Fig. 2 weist die Luvseite 20 zwei Teilabschnitte mit der strukturierten Oberfläche 10 auf, nämlich einen oberen Teilabschnitt und einen unteren Teilabschnitt, die im Wesentlichen ungefähr dreiecksförmig ausgebildet sind. Dabei hat an der Umluftklappe 9 nur der in Fig. 2 und 3 obere Bereich der strukturierten Oberfläche 10 eine Funktion, weil nur dieser in der Zwischenstellung gemäß der Darstellung in Fig. 3 an bzw. in dem Frischluftkanal 4 angeordnet ist, Der untere in den Fig. 2 und 3 dargestellte Teilbereich der strukturierten Oberfläche hat in diesem Ausführungsbeispiel keine Funktion und es könnte auch auf diesem unteren Teilbereich der strukturlerten Oberfläche verzichtet werden, jedoch kann die Umluftklappe gemäß der Darstellung in Fig. 2 und 3 auch in einer anderen Anordnung innerhalb einer anderen Kraftfahrzeugklimaanlage 1 angeordnet werden, so dass in einer anderen Anordnung oder Ausrichtung der Umluftklappe 9 der in Fig. 2 und 3 untere dargestellte Teilabschnitt der strukturierten Oberfläche 10 zur Reduzierung der Luftgeräusche dient und umgekehrt der in Fig. 2 und 3 oben dargestellte Teilabschnitt der strukturierten Oberfläche 10 dann keine Aufgabe hat.

An der Luvseite 20 der Umluftklappe 9 ist ferner einer Versteifungsstruktur 26 angeordnet, welche in der Form von Rippe 27 oder Waben 28, d. h, als Rippen- oder Wabenstruktur 27, 28, ausgebildet sind. Diese Versteifungsstruktur 26 dient ausschließlich dazu, die Steifigkeit der einteiligen Umluftklappe 9 aus thermoplastischem Kunststoff zu erhöhen. Dabei ist die Höhe der strukturierten Oberfläche 10 größer als die Höhe der Versteifungsstruktur 26. Aufgrund der geringen Höhe der Versteifungsstruktur 26 ist diese nicht ausreichend, um die Luftgeräusche der Umluftklappe 9 in der Zwischenstellung in dem Frischluftkanal 4 bei Staudruck an dem Frischluftkanal 4 wesentlich oder signifikant zu reduzieren.

Abweichend zur Ausbildung der strukturierten Oberfläche als Dome 11 kann die strukturierte Oberfläche 10 (nicht dargestellt) auch als eine Rippenstruktur 27 oder eine Wabenstruktur 28 ausgebildet werden, die jedoch eine grö-βere Höhe aufweist als die Versteifungsstruktur 26 zur Erhöhung der Steifigkeit der Umluftklappe 9.

Zwei Lagerstutzen 30 dienen zur Gleitlagerung der Umluftklappe 9 an dem Gehäuse 13 und ein Dichtrand 29 dient zur Abdichtung des Umluftkanales 5 in der Frischluftstellung und des Frischluftkanales 4 in der Umluftstellung der Umluftklappe 9. Der Dichtrang 29 ist am Ende zackenförmig ausgebildet, um die Luftgeräusche zu reduzieren. Zwischen der Umluftklappe 9, einschließlich der Versteifungsstruktur 26 und der strukturierten Oberfläche 10, und der Trennwand 32 besteht in der Zwischenstellung oder in der Frischluftstellung oder der Umluftstellung ein ausreichender Abstand, beispielsweise im Bereich zwischen 1 und 3 mm. Dieser Abstand ist erforderlich, um ein Festklemmen der Umluftklappe 9 im Bereich der strukturierten Oberfläche 10 an der Trennwand 32 zu verhindern, weil Fertigungsungenauigkeiten auftreten und aufgrund von Temperaturänderungen sich auch thermische Verformungen der Komponenten ergeben.

Radial innerhalb der Umluftklappe 9 ist eine Stauklappe 31 angeordnet. Die Stauklappe 31 ist in analoger Weise wie die Umluftklappe 9 als ein Teilzylinderabschnitt 25 ausgebildet und ist um die gleiche Schwenkachse 19 verschwenkbar gelagert. Dabei kann die Stauklappe 31 mittels eines separaten Aktuators sowie eines separaten Mechanismus unabhängig von der Umluftklappe 9 bewegt werden. Die Stauklappe 31, weiche in Fig. 3 strichliert dargestellt ist, dient nur dazu, bei einer hohen Fahrgeschwindigkeit und einem damit verbundenen hohen Staudruck in dem Frischluftkanal 4 bei einer Frischluftstellung der Umlufklappe 9 den Frischluftkanal 4 teilweise zu verschließen, damit an den Luftdüsen im Bereich des Innenraumes des Kraftfahrzeuges zur Zuführung von Luft keine zu großen Luftmengen oder Strömungsgeschwindigkeiten auftreten. Die Stauklappe 31 kann dabei eine glatte Luvseite 20 oder an der Luvseite 20 eine Versteifungsstruktur 26 oder zusätzlich zu der Versteifungsstruktur 26 auch eine strukturierte Oberfläche 10 in analoger Weise wie die Umluftklappe 9 aufweisen.

Insgesamt betrachtet sind mit der erfindungsgemäßen Kraftfahrzeugklimaanlage 1 wesentliche Vorteile verbunden. In der Zwischenstellung der Umluftklappe 9 können auf einfache Art und Weise mit der strukturierten Oberfläche 10 als Dome 11 die Luftgeräusche, insbesondere Pfeifgeräusche, wesentlich reduziert werden.

## Patentansprüche

1. Kraftfahrzeugklimaanlage (1), umfassend
- ein Gehäuse (13),
- einen Frischluftkanal (4) zum Durchleiten von Frischluft, aus einer Umgebung eines Kraftfahrzeuges,
- einen Umluftkanal (5) zum Durchleiten von Umluft aus einem Innenraum des Kraftfahrzeuges,
- einen Zuführungsluftkanal (6) zum Durchleiten von Frischluft und/oder von Umluft,
- eine bewegbare, insbesondere verschwenkbare, Umluftklappe (9), welche in einer Frischluftstellung den Umluftkanal (5) verschließt und der Frischluftkanal (4) geöffnet ist und in einer Umluftstellung den Frischluftkanal (4) verschließt und der Umluftkanal (5) geöffnet ist,
**dadurch gekennzeichnet, dass**
die Umluftklappe (9) mit einer strukturierten Oberfläche (10) zur Reduzierung von Luftgeräuschen ausgebildet ist.

2. Kraftfahrzeugklimaanlage nach Anspruch 1, **dadurch gekennzeichnet, dass** die strukturierte Oberfläche (10) ausschließlich zur Reduzierung von Luftgeräuschen dient.

3. Kraftfahrzeugklimaanlage nach Anspruch 1 oder 2, **dadurch gekennzeichnet, dass** die strukturierte Oberfläche (10) als Rippen und/oder Dome (11) und/oder Waben ausgebildet ist.

4. Kraftfahrzeugklimaanlage nach einem oder mehreren der vorhergehenden Ansprüche, **dadurch gekennzeichnet, dass** die Umluftklappe (9) um eine Schwenkachse (19) verschwenkbar gelagert ist und in einem Schnitt senkrecht zu der Schwenkachse (19) als ein Kreissegment ausgebildet ist.

5. Kraftfahrzeugklimaanlage nach einem oder mehreren der vorhergehenden Ansprüche, **dadurch gekennzeichnet, dass** die strukturierte Oberfläche (10) der Umluftklappe (9) an einer in Richtung der Frischluft in dem Frischluftkanal (4) und an einer in Richtung der Umluft in dem Umluftkanal (5) zugewandten Luvseite (20) an der Umluftklappe (9) ausgebildet ist.

6. Kraftfahrzeugklimaanlage nach Anspruch 4 oder 5, **dadurch gekennzeichnet, dass** die strukturierte Oberfläche (10) an einer bezüglich der Schwenkachse (19) abgewandten Seite (22) an der Umluftklappe (9) ausgebildet ist.

7. Kraftfahrzeugklimaanlage nach einem oder mehreren der Ansprüche 4 bis 6, **dadurch gekennzeichnet, dass** die strukturierte Oberfläche (10) in Richtung (23) der Schwenkachse (19) nur an einem Teilabschnitt, insbesondere mittlerem Teilabschnitt, ausgebildet ist.

8. Kraftfahrzeugklimaanlage nach einem oder mehreren der Ansprüche 4 bis 7, **dadurch gekennzeichnet, dass** die strukturierte Oberfläche (10) in tangentialer Richtung (24) bezüglich der Schwenkachse (19) nur teilweise ausgebildet ist, insbesondere nur an einem tangentialen Teilabschnitt, welcher dem Frischluftkanal (4) zugewandt ist.

9. Kraftfahrzeugklimaanlage nach einem oder mehreren der vorhergehenden Ansprüche, **dadurch gekennzeichnet, dass** die Höhe der strukturierten Oberfläche (10) zwischen 2,5 und 5 mm, insbesondere zwischen 3,0 und 3,7 mm, liegt und/oder die Höhe der strukturierten Oberfläche (10) zwischen dem 1,5- und 3-Fachen, insbesondere zwischen dem 1,7 und 2,2-Fachen, der Dicke, der Umluftklappe (9), insbesondere einem Teilzylinderabschnitt (25) der Umluftklappe (9), au-βerhalb der strukturierten Oberfläche (10) liegt.

10. Kraftfahrzeugklimaanlage nach einem oder mehreren der vorhergehenden Ansprüche, **dadurch gekennzeichnet, dass** die Umluftklappe (9) mit einer Versteifungsstruktur (26), insbesondere Rippen- oder Wabenstruktur (27, 28), außenseitig versehen ist und/oder die Umluftklappe (9) einen Dichtrand (29), z. B. einen Rand aus einem elastischen Material oder eine Schaumdichtung, aufweist und/oder die Umluftklappe (9) mittels einer Gleitlagerung mit dem Gehäuse (13) verbunden ist und/oder die Kraftfahrzeugklimaanlage (1) einen Aktuator, z. B. einen Elektromotor, und einen Mechanismus umfasst und der Aktuator mit der Umluftklappe (9) mechanischen verbunden ist, so dass die wenigstens eine Umluftklappe (9) mittels des Mechanismus von dem Aktuator bewegbar ist und/oder die Kraftfahrzeugklimaanlage (1) ein Gebläse (12) und/oder einen Kältemittelverdampfer (18) und/oder eine Heizeinrichtung (2) umfasst.
